# EUROPEAN PATENT APPLICATION

(11) **EP 4 024 674 A1**
(43) Date of publication of application: **06.07.2022**
(21) Application number: 20275193.9
(22) Date of filing: 29.12.2020
(51) Int. Cl.: H02K 3/34, H02K 3/24, H02K 3/32, H02K 15/06

(54) **SLOT LINER FOR ELECTRIC MACHINE**

(71) Applicant: Hamilton Sundstrand Corporation, Charlotte, NC 28217 (US)
(72) Inventor: PAGE, Andrew, Tring, Hertfordshire HP23 4QD (GB)
(74) Representative: Dehns

(57) **Abstract**

A slot liner for an electric machine, arranged to be located and removably retained in a slot (2') of a machine to secure a winding (3') in the slot, whereby the slot liner comprises a flexible electrically non-conductive material defining a first surface to be located against a wall of the slot and an opposing surface (12) having one or more surface features (13) extending into the slot, when in position, such that when a winding is formed across the slot liner, turns of the winding are spaced from other turns of the winding by the surface features.

## Description

### TECHNICAL FIELD

The present disclosure is concerned with electrical machines and, in particular, slot liners for electrical machines.

### BACKGROUND

Rotary electric machines are used in many fields to generate mechanical or electrical energy. Such machines are used, for example, in industrial applications, automotive and aerospace applications.

A typical rotary electrical machine comprises a rotor and a stator, the rotor mounted to rotate relative to the stationary stator. Depending on the machine design, the stator or the rotor comprises a body have a plurality of teeth around its circumference, defining slots between the teeth. Coils of conductive e.g. copper wire, such as round, square. hairpin or Litz wires, form windings wound around the teeth and extending within the slots. Conventionally, the rotor is mounted around the stator core. In other machines, the stator is mounted outside the rotor. The design and operation of such machines is well known in the art and will not be described further.

Slot liners may be provided within the stator or rotor slots to electrically isolate the conductive windings from the core. Slots liners are typically made of a thin electrically insulating paper-type material to fit between the slot wall and the winding without taking up too much space in the slot.

In electric machines, particularly the more high power machines such as those used in aircraft, one of the main problems to be addressed in designing the machine is the large amount of heat generated at the machine windings. One approach to dealing with this problem is to consider designs that might generate less heat. Another approach is to consider designs that effectively dissipate the heat that is generated.

Direct and indirect cooling solutions have been proposed. Indirect cooling involves providing some form of heat sink or cooling plate to dissipate the heat in the machine to e.g. air or a coolant fluid. Another solution is the provision of a coolant such as a coolant fluid or cold air that is injected to flow across the surfaces to be cooled.

In designing machines, there is often a need or desire to minimise the size or weight of the machine without compromising power and performance. This often means aiming to create windings with as much of the conductive wire in the machine slots as possible. Litz wire configurations, in particular, fill a large part of the slot volume. There is, however, a conflict between this objective and the need to ensure effective cooling. For effective cooling, it is desirable to have as much of the winding surfaces as possible in contact with the coolant. However, the more tightly packed the conductive wires are in the slots, the less space there is for the coolant and less of the windings surface will come into contact with the coolant.

Further, the more conductive wire in the slots, the less space there is for temperature sensors to be mounted in the slots. Sensing the temperature of the windings is important for the safe and effective operation of the machine. It is important to know when a machine is, or is close to overheating. Ideally, temperature sensors should be mounted as close as possible to the location where the most heat is generated - e.g.. in the slots or at the end windings. Temperature sensors can be mounted outside of the slots e.g. at the end windings, but their readings will then need to be adjusted to determine or estimate the temperature inside the slots. Even if it is possible to mount temperature sensors in slots, they may interfere with the flow of coolant which affects cooling efficiency.

Another consideration for machine design is that the windings should, ideally, stay in a fixed position within the slots. Materials such as copper, however, tend to deform or move as they heat up, which can also affect the performance of the machine.

There is a desire for an improved slot liner that allows for improved cooling and securing of the windings in place in the slots.

### SUMMARY

According to one aspect of the disclosure, there is provided a slot liner for an electric machine, arranged to be located and removably retained in a slot of a machine to secure a winding in the slot, whereby the slot liner comprises a flexible electrically non-conductive material defining a first surface to be located against a wall of the slot and an opposing surface having one or more surface features extending into the slot, when in position, such that when a winding is formed across the slot liner, turns of the winding are spaced from other turns of the winding by the surface features.

While the slot liner can be made of any relatively flexible, electrically insulative material, it is preferably a material such as plastic that can keep its shape and can be manufactured easily and at low cost.

The surface features are intended to separate the turns of the windings into bundles to provide a greater surface are of the windings available to be contacted by coolant. The number of turns the windings will have will depend on the size and purpose of the machine. Even a single separator surface feature will provide beneficial cooling effects, but the number of separating surface features can vary.

The surface features also serve to secure the windings in place and better keep them in the desired position in the slot.

For additional securing properties, the slot liner can be provided with a retention means such as a retaining lug arranged to cooperate with a corresponding means provided on the machine.

The slot liner is preferably arranged to be fitted over a tooth of a machine stator so as to extend into the adjacent slot. A retaining lug or hook or the like can therefore be formed to slot into a corresponding groove or opening in the tooth.

In a preferred embodiment, the slot liner may also be provided with means for holding a temperature sensor in or close to the slot. This may be in the form of a clip or sleeve or some other form of holder.

The slot liner may be formed as a unit together with the windings already provided thereon so that the liner and integral windings can be easily and quickly fitted into the machine slot and can be easily removed for repair or replacement if needed.

According to another aspect, there is provided a method of manufacturing a slot liner for an electric machine, comprising forming a body of flexible non-conductive material shaped to fit into the slot of an electric machine and to be positioned against a wall of the slot, and forming surface features on one surface of the body configured to receive thereover windings of conductive material and to provide separation between one or more turns of the winding.

The method may also include forming a retaining structure on the slot liner body for retaining the liner in the slot.

The method may also include forming a holder for a temperature sensor on the slot liner body.

The method may further include winding a conductor for the machine over the slot liner.

According to another aspect, there is provided a method of mounting a winding into a slot of an electric machine, the method comprising mounting the winding onto a slot line having surface features formed thereon to provide separation between two or more turns of the winding and securing the winding in the machine slot.

### BRIEF DESCRIPTION OF THE DRAWINGS

Preferred embodiments will now be described by way of example only with reference to the drawings. The examples are described in the context of a stator slot liner but the disclosure could equally apply to a rotor slot liner.
Figure 1 shows a view of a partial stator structure with a conventional slot liner.
Figure 2 shows a section of a stator structure with a conventional slot liner
Figure 3 is a perspective view of a slot liner according to the present disclosure.
Figure 4 shows a perspective view of a winding mounted on a slot liner as shown in Fig. 3.
Figure 5 is a section view of windings mounted on slot liners on a wound stator.

### DETAILED DESCRIPTION

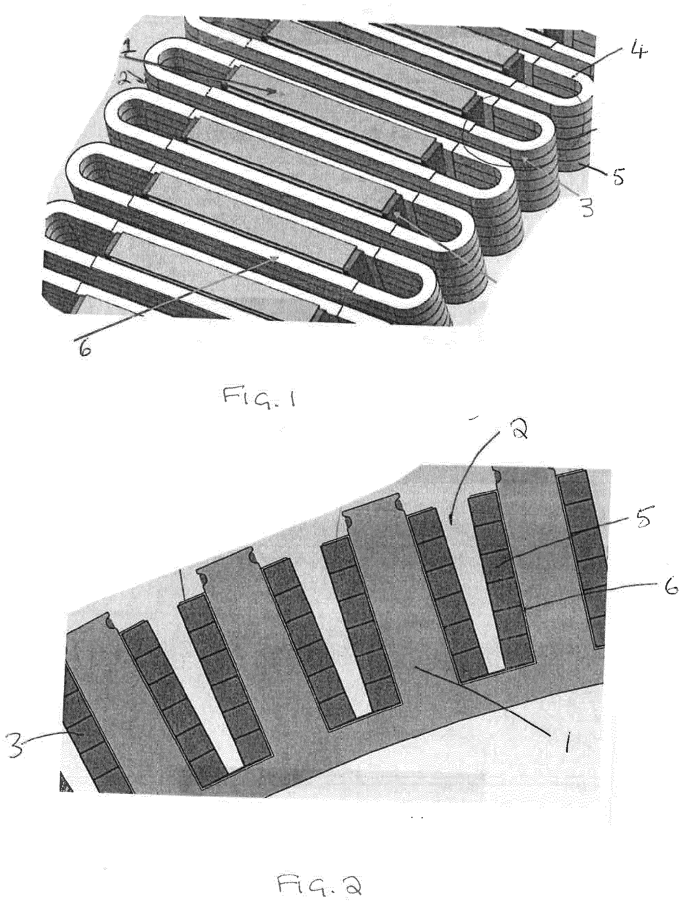

Figures 1 and 2 show a typical assembly for stator windings. The example shown here is for an outer rotor machine but the principles of the disclosure can also apply to inner rotor machines. Litz wires are currently preferred in many machines but other standard conductive wires can be used for the windings. The example described uses direct cooling and improves the efficiency of that cooling due to the slot liner structure. The slot liner will, however, also provide advantages in terms of cooling and also in terms of retaining the windings in place, even for indirectly cooled machines.

In the simplified model shown in Fig. 1, the stator has a plurality of teeth 1 around the circumference of the stator body. Slots 2 are defined between the teeth. Conductive windings 3 are wound around the teeth extending into the slots 2 with end windings 4 extending beyond the slots. Each winding has a number of turns 5. In the example shown, the winding is a concentrated type i.e. each tooth only has a single phase wound onto it. Any number of phases can, however, be wound around the teeth in the context of the disclosure.

As can be seen, in order to fit as much conductor as possible in the slots, the wires are wound tightly around each tooth 1.

Although not shown here, for simplicity, the teeth would usually be provided with a flange or wedge to retain the coil on the tooth and a sleeve would be provided around the structure to retain any fluid flowing through the stator. A coolant would flow through the structure to cool the windings in the slots.

A thin, non-conductive slot line 6 is provided between each tooth and the winding wound thereon, to provide electric insulation between the stator core and the winding.

The slot liner 6 can be seen more clearly in the sectional view of Fig. 2. Conventionally, this is a type of dielectric paper that is shaped as a liner and fitted into the slots 2. The windings 3 are then wound around the teeth and the slot liner.

The fitting of the liner and the winding process is difficult and time consuming and the liners and windings can be easily displaced during assembly. Further, as mentioned above, there is little space in the slot for coolant to effectively flow across the winding surfaces to provide effective cooling and there is little space for temperature sensors to be mounted into the slots without impeding fluid flow.

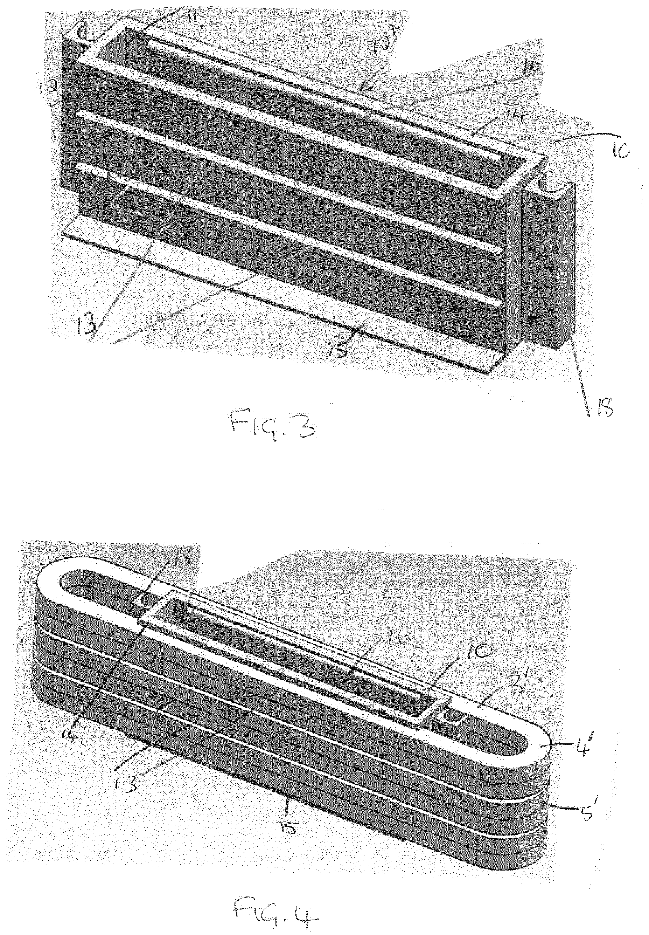

A slot liner 10 according to the present disclosure is shown in Fig. 3. Here, the slot liner is made of a material that has some degree of rigidity to keep its shape whilst still being flexible enough to bend to fit over the teeth and to be retained in position. A dielectric plastic material is one suitable material for the slot liner.

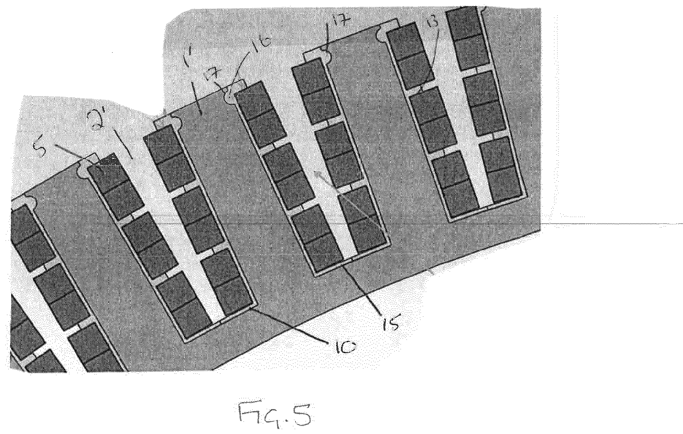

In the example shown, the slot liner 10 comprises a box-type structure shaped and sized to fit over a tooth of the machine in which it is to be installed such that the interior 11 forms a close fit around the tooth. In its most basic form, not shown here, the slot liner of the disclosure could just comprise one wall of the structure so as to fit against one side of the tooth. Retention of the slot liner and, hence the winding, is, however, improved by a structure as shown here, arranged to fit over a tooth and extend on both sides of the tooth so as to form a liner on one wall of each adjacent slot (best seen in Fig. 5).

One the outer surface 12 of the slot liner 10 that will, in use, face into the slot, surface features 13 are formed. In the example shown in Fig. 2, the opposite outer side 12' of the liner structure would also be provided with similar surface features that would extend into an adjacent slot on the other side of the tooth over which the liner is fitted.

In the example, the surface features are ridges extending from the outer surface and two such ridges are shown. Of course, the features can have various shapes and dimensions and one or much such features may be provided. The surface features 13 serve to separate turns of the windings as described further below and also to secure the winding in place in the slot.

It is also preferably to provide a lip or flange 14,15 at both the top and bottom of the slot liner to further secure the winding in place.

Optionally, a retaining device such as a lug 16 may be provided to secure the slot liner 10 to the tooth. Here a lug 16 is provided extending into the interior of the slot liner 10. This is provided with some degree of flexibility such that as the slot liner is fitted over the tooth, the lug can be retained in a corresponding groove 17 provided on the tooth. Other retaining mechanisms can also be envisaged.

Another optional feature shown here is a holder 18 for a temperature sensor. This can secure a temperature sensor in position sufficiently close to the winding in the slot to allow accurate temperature measurement. The shape and size of the holder will, of course, depend on the type of temperature sensor.

Fig. 4 shows the winding 3' wound onto the slot liner 10. The turns 5' are wound tightly around the slot liner 10. End wings 4' are also shown extending beyond the slot liner 10. As can be seen, the surface features 13 provide separation between some of the turns 5' of the winding. Here the separating surface features 13 are arranged such that the winding turns are separated into three bundles of two. This is, of course, only an example and any number of bundles, with any number of turns can be formed. The winding is further secured against sliding off the liner 10 by flanges 14 and 15. The optional temperature sensor holder 18 (here one on each end of the slot liner, although another option would be to just have one holder at one end) is located within the winding.

Figure 5 shows a plurality of slot liners 10 mounted onto a section of a stator. A slot liner 10 is fitted over each tooth 1' so as to line the slot walls defined by that tooth. As mentioned above, it would also be possible to have the slot liner configured just to line on wall but the example shown is preferred. The winding is wound around the slot liner such that the surface features 13 separate the turns 5' of the windings 3' into bundles as described above. The lip 15 fits at the bottom of the slot. The slot liner is secured to the tooth by the retainer lug 16 that latches into the groove 17 on the tooth.

Ideally, the winding would be formed around the slot liner before the liner is mounted over the tooth as this simplifies assembly. The integral unit of slot liner and winding can then be easily and quickly pushed over the tooth and latched into place by the retainer lug. If a temperature sensor holder is provided, the temperature sensor can then be fitted into the holder (or this can be done before fitting the slot liner over the tooth.

To simplify assembly, the slot liner, as shown here, is open ended but it may, alternatively have a closed end. The liner may also be provided with additional flexibility by means of slits or a split surface or the like.

The arrangement described herein allows for improved coolant flow around the windings as well as improved securing of the slot liner and winding and simplified assembly. The addition of the temperature sensor holder allows temperature to be as accurately detected as possible.

## Claims

1. A slot liner for an electric machine, arranged to be located and removably retained in a slot (2') of a machine to secure a winding (3') in the slot, whereby the slot liner comprises a flexible electrically non-conductive material defining a first surface to be located against a wall of the slot and an opposing surface (12) having one or more surface features (13) extending into the slot, when in position, such that when a winding is formed across the slot liner, turns of the winding are spaced from other turns of the winding by the surface features.

2. The slot liner of claim 1 made of flexible plastic.

3. The slot liner of claim 1 or 2, wherein the one or more surface features (13) comprise one or more ridges.

4. The slot liner of any preceding claim, further comprising retention means (16) arranged to cooperate with a corresponding means provided on the machine.

5. The slot liner of any preceding claim comprising a body arranged to be fitted over a tooth of a machine stator so as to extend into the adjacent slot.

6. The slot liner of any preceding claim, further comprising means for holding a temperature sensor.

7. The slot liner of any preceding claim, formed as a unit together with a winding of conductive material provided thereon.

8. A method of manufacturing a slot liner for an electric machine, comprising forming a body of flexible non-conductive material shaped to fit into the slot of an electric machine and to be positioned against a wall of the slot, and forming surface features on one surface of the body configured to receive thereover windings of conductive material and to provide separation between one or more turns of the winding.

9. The method of claim 8, further comprising forming a retaining structure on the slot liner body for retaining the liner in the slot.

10. The method of claim 8 or 9, further comprising forming a holder for a temperature sensor on the slot liner body.

11. The method of claim 8, 9 or 10, further comprising winding a conductor for the machine over the slot liner.

12. A method of mounting a winding into a slot of an electric machine, the method comprising mounting the winding onto a slot line having surface features formed thereon to provide separation between two or more turns of the winding and securing the winding in the machine slot.
